# EUROPÄISCHE PATENTSCHRIFT

(11) **EP 1 134 093 B1**
(45) Veröffentlichungstag und Bekanntmachung des Hinweises auf die Patenterteilung: **30.11.2005**
(21) Anmeldenummer: 01710009.0
(22) Anmeldetag: 06.03.2001
(51) Int. Cl.: B44C 5/04, B44F 9/10, B27N 3/00, B27N 3/04, B32B 5/00

(54) **Dekorative Platte, Verfahren zu ihrer Herstellung und ihre Verwendung**
Decorative panel, manufacturing process and use of this panel
Panneau décoratif, procédé pour sa fabrication et son utilisation

(30) Priorität: 13.03.2000 DE 10012136
(43) Veröffentlichungstag der Anmeldung: 19.09.2001
(73) Patentinhaber: Trespa International B.V., 6002 SM Weert (NL)
(72) Erfinder: Willemse, Remco Cornelis, 6004 DA Weert (NL); van de Wall, Wilhelmus Josephus Alex, 5663 SM Geldrop (NL); Kömhoff, Henricus Hubertus Maria, 6039 DE Stramproy (NL)
(74) Vertreter: Dohmen, Johannes Maria Gerardus

(56) Entgegenhaltungen:
- DE-A- 2 540 241
- DE-A- 3 147 989
- DE-A- 4 310 191
- DE-A- 19 517 763
- DE-A- 19 858 756

## Beschreibung

Die Erfindung betrifft eine dekorative, insbesondere für Innen- und Außenanwendung an Gebäuden geeignete Platte, bestehend aus einem gepreßten, ein- oder mehrschichtigen Kern aus Holz- und/oder Zellulosefasern, die von Hitze gehärtetetem Harz umgeben sind sowie ein Verfahren zur Herstellung einer derartigen Platte und ihre Verwendung.

Im Stand der Technik sind Platten aus Holzspänen und Holzfasern mit einer Matrix von Aminoplast oder Phenolharzen oder Zement und auch Sperrholzplatten bekannt, die eine gleichmäßige Dichte zeigen und für die Außenanwendung oder feuchte Innenanwendung geeignet sind. Derartige Platten sind jedoch im Gegensatz zu Schichtstoffplatten nicht wartungsfrei und müssen wegen starker Wasseraufnahme durch die nicht-geschlossene Oberfläche regelmäßig allseitig nachbehandelt werden. Durch Wasseraufnahme kann es zu einer starken Quellung unter Zunahme der Plattendicke kommen. Derartige Platten besitzen eine geringe Festigkeit und sind nicht dekorativ.

In der DE-A 19 12 300 ist ein plattenförmiges dekoratives Formteil aus Holzsägespänen beschrieben, das eine Matrix aus Phenolharz enthält, wobei der Harzgehalt zwischen 5 und 15 Gew. -%, bezogen auf das Trockengewicht der Holzspäne, beträgt. Die Witterungsbeständigkeit dieses Formteils ist wenig zufriedenstellend. Bei Bewitterungsversuchen kommt es zu starker Wasseraufnahme und entsprechender Randquellung und Aufspaltung des gepreßten Kerns, wodurch Rißbildung an der Oberfläche bereits nach wenigen Wochen eintritt.

Leichtbauplatten wie sie in der GB-A 1 015 803 beschrieben sind, enthalten Oberflächenschichten, die beispielsweise aus Holzwolle mit einer Mindestlänge von etwa 50 mm bestehen. Diese Holzwolle überwiegt in der Gesamtmasse der Platte, während das Harz nur zu einem geringen Anteil vorhanden ist, der etwa im Bereich von 6 bis 10 Gew.-% liegt. Das Harz dient nur zum gegenseitigen Verbindungen der Holzteilchen. Die Dichte dieser Leichtbauplatten ist mit maximal 450 kg/m³ relativ niedrig.

Aus der EP-B 0 081 147 (US-A 4 503 115) ist eine dekorative Bauplatte bekannt, die aus einem gepreßten Kern aus Holzteilchen besteht, die von hitzegehärtetem Phenol-Formaldehydharz umgeben sind. Die Bauplatte weist auf einer oder beiden Oberflächen des Kerns dekorative Schichten auf, die aus einem Gewebe, Vlies, Stoff, einer Kunststoff-, Papier- oder Holzfolie und/oder aus einer Lackschicht bestehen. Die Holzfasern und/oder Zellulosefasern des Kerns besitzen eine maximale Länge von 20 mm, wobei die Holzfasern mit dem hitzehärtbaren Phenol-Formaldehydharz in wäßriger Lösung oder Dispersion beschichtet sind. Der Harzanteil beträgt mehr als 150 g und reicht bis zu 900 g je 1000g Trockenfasern. Der Wassergehaltder Holzfasern liegt in der Größenordnung von 3 bis 10 Gew.-% und die Dichte der Bauplatte beträgt 1100 bis 1500 kg/m³. Insbesondere besteht die dekorative Schicht aus einer mit Melamin-Formaldehydharz getränkten Dekorfolie mit einem Flächengewicht von 80 bis 400 g/m³. Die Dekorschicht enthält gegebenenfalls einen Füllstoff und/oder einen Farbstoff. Erfolgt die Dekoration des gepreßten Kerns an der Oberfläche durch Lackierung mit einem vernetzten Acryl-, Urethan-, Epoxid- oder Melaminharz so enthält diese Lackierung gegebenenfalls einen Füllstoff und/oder einen Farbstoff.

Weitere dekorative Platten werden in DE-A-19 858 756, DE-A-4 310 191, DE-A-19 517 763 und DE-A-2 540 241 offenbart.

Diese dekorative Bauplatte wird in der Weise hergestellt, daß eine oder mehrere übereinander angeordnete, mechanisch vorverdichtete Schichten auf der Basis von Holzfasern zu dem Kern der Bauplatte in der Hitze verpreßt werden, wobei das hitzehärtbare Phenol-Formaldehydharz der vorverdichteten Schichten gehärtet wird. Eine oderbeide Oberflächen des Kerns werden mit einer Dekorschicht ausgerüstet, die entweder auf die vorverdichtete Matte aus mehreren Schichten oder nach dem Verpreßen dieser Matte zu dem Kern auf diesen aufgebracht wird.

Diese bekannte Bauplatte hat in Längs- und Querrichtung eine sehr gleichmäßige Maßbeständigkeit und zeigt selbst unter stark wechselnden Witterungseinflüssen eine große Dimensionsstabilität. Gegenüber anderen bekannten Platten aus Holzspänen und -fasern oder Zellulosefasern besitzt diese Bauplatte jeweils eine höhere Biege-, höhere Zug- und Querfestigkeit, eine höhere Maßbeständigkeit und eine verringerte Wasseraufnahme. Diese Bauplatte ist ein Laminat aus vorverpreßten Holzfasern-Harz-Schichten und Dekorschichten und hat wegen der witterungsbeständigen Dekorschichten, die die Oberflächen des Kerns abdecken, über lange Zeit ein unverändertes Farbaussehen.

Demgegenüber stellt sich die Aufgabe der Erfindung in der Weise,daß eine dekorative Platte der eingangs genannten Art und ein Verfahren zur der Herstellung der Platte vorgeschlagen werden, die eine Platte mit dem Aussehen einer Massivholzplatte ergeben, mit einem Patina-Effekt der Oberflächen der Platte und einer Färbung, die im Naßzustand eine andere als im Trockenzustand der Platte ist. Im Rahmen dieser Aufgabe sollen die Maßbeständigkeit in Quer- und Längsrichtung und die Biege- und Zugfestigkeit beibehalten werden, ebenso die geringe Wasseraufnahme, wie sie bei der Bauplatte gemäß der EP-B 0 081 147 gegeben sind.

Die Aufgabe wird durch die eingangs beschriebene Platte in der Weise gelöst, daß die Kernschicht Holz- und/Zellulosefasern mit einer Länge von 0,3 bis 30 mm enthält, und dass ein Teil der Fasern, der an die Oberfläche der Kernschicht angrenzt, freiliegt. In Ausgestaltung der Erfindung enthält die Kernschicht Farbstoffpigmente und sind die Farbstoffpigmente aus der Gruppe der anorganischen, gefärbten oxidischen Pigmente, anorganischen Pigmente mit Hydroxygruppen, anorganischen sulfidischen Pigmente, Ruß-Pigmente, Phthalocyanin-Pigmente und/oder Chinacridon-Pigmente ausgewählt. Insbesondere sind die Farbstoffpigmente aus der Gruppe Titandioxid, Zinksulfid, Zinksulfat, rotes und gelbes Eisenoxid, blaue Phthalocyanin-Pigmente, Lampenschwarz-Pigmente, oxidische Schwarzpigmente und/ oder Chinacridon-Pigmente mit violett-roten Farbnuancen ausgewählt.

Zweckmäßigerweise ergibt die Verwitterung der Holz- und/oder Zellulosefasern an den Oberflächen der Kernschicht einen Patinaschleier grau-silbriger Farbe. Dabei legt sich an den Plattenoberflächen der grau-silbrige Patina-Schleier über die Originalfarbe der Kernschicht. Die weitere Ausgestaltung der erfindungsgemäßen Platte ergibt sich aus den Merkmalen der Patentansprüche 6 bis 11.

Bei dem erfindungsgemäßen Verfahren zur Herstellung der Platte werden eine oder mehrere mechanisch vorverdichtete Schichten aus Zellulose- und/oder Holzfasern, die von einem hitzehärtbaren Harz eingeschlossen sind, übereinanderliegend unter Hitze miteinander verpreßt, wobei das Harz gehärtet wird, und die Farbstoffpigmente in das Harz vor der Harzbeschichtung der Zellulose- und/oder Holzfasern in den mechanisch vorverdichteten Schichten eingebracht werden. Verfahrensgemäß werden die vorverdichteten Schichten, ohne Lackierung der Oberflächen oder Beschichtung mit Dekor-, Kunststoff-, Papier- oder Holzfolie, bei einer Temperatur von 120 bis 180°C und einem Druck von 30 bis 100 bar miteinander zu Platten verpreßt.

Bei der Verwendung der erfindungsgemäßen Platte als Fassadenverkleidung in Gestalt einer vorgehängten Fassade, einer Wand- oder Dachblende, einer Balkonverkleidung oder Brüstungsplatte ist die Platte einer direkten Außenbewifterung unterworfen, welche das Harz und die Holz- und/oder Zellulosefasern, die unmittelbar an die Plattenoberflächen angrenzen, geringfügig verwittern läßt, wodurch die ursprüngliche Farbe der Platte verändert wird. Durch die geringfügige Verwitterung des Harzes werden nämlich die Fasern an den Plattenoberflächen teilweise freigelegt und verwittern in einem geringen Umfang, ohne dass es zu einer merkbaren Veränderung der physikalischen, mechanischen und chemischen Eigenschaften der Platten kommt. Die Oberflächen der Platten erhalten dabei einen Patina-Effekt, durch einen sich ausbildenden grau-silbernen Farbschleier, der sich über die Oberflächen legt. Im Trockenzustand hat die Platte dann das Aussehen einer natürlichen Massivholzplatte mit Patinaeffekt. Wird die Platte durch die Witterung feucht bzw. naß, so verschwindet dieser Patina-Effekt und die Platte erhältihrursprüngliches Farbaussehen. Eine Erklärung für die Farbänderung beim Übergang von dem Trocken- zu dem Naßzustand der Platte liefert das unterschiedliche Reflexionsverhalten der Platte in diesen Zuständen. Im Trockenzustand wird das Lichtinfolge derunregelmäßigen, leicht verwitterten Oberfläche regel-bzw. richtungslos reflektiert. ImNaßzustand ist die Plattenoberfläche befeuchtet, wodurch eine gleichmäßige Oberfläche vorliegt, die das Licht mehr gerichtet reflektiert, so dass ein Farbeindruck entsteht, der demjenigen der Platte vor der leichten Verwitterung entspricht. Die Platte erweckt durch diese Farbänderungen den Eindruck, daß es sich um natürliches Holz handelt und keineswegs um ein Laminat aus verschiedenen Schichten, die miteinander verpreßt sind. Sie besitzt alle technischen und physikalischen Vorteile einer aus Schichten bestehenden, unter hohem Druck und Hitze verpreßten Platte in Laminatform, wie hohe Festigkeit, geringe Splitterneigung bei Stoßbeanspruchung, Maßbeständigkeit und geringe Feuchtigkeitsaufnahme. Durch die entsprechende Auswahl und Kombination bzw. Mischung der zugesetzten Farbstoffpigmente können verschiedene natürliche Holzsorten imitiert werden.

Der Patina-Effekt der Platte kann insbesondere architektonisch genutzt werden, da eine Fassadenverkleidung aus solchen Platten bei unterschiedlichen Witterungsverhältnissen unterschiedliches Farbaussehen besitzt, wodurch der Eindruck einer Fassadenverkleidung aus natürlichem gewachsenem Massivholz entsteht. Der Patina-Effekt tritt normalerweise bei allen Holzsorten auf und einige Holzsorten werden wegen ihres besonders schönen Patina-Effekts als Dekorelemente von Architekten bevorzugt verwendet. Zu diesen Holzsorten zählen u.a. Teak- und Palisanderhölzer.

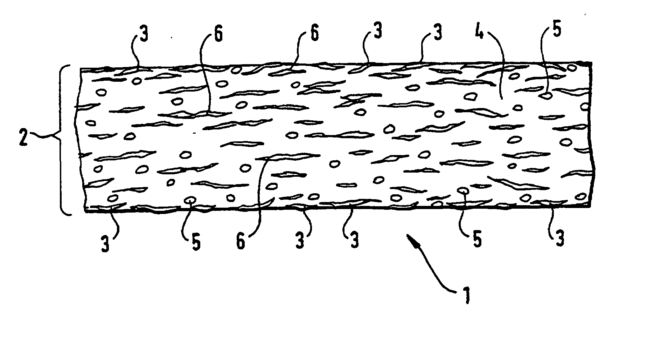

Die Herstellung der Holzfasern für die Schichten, die zu dem Kern verpreßt werden, ist in der EP-B 0 081 147 ausführlich beschrieben. Die einzige Figur zeigt einen Schnitt durch eine Platte 1 nach der Erfindung, die einen Kern bzw. eine Kernschicht 2 aus innenliegenden Holz- und/oder Zellulosefasern 6 und Harz 4 aufweist, in dem Farbstoffpigmente 5 eingeschlossen sind. Die Kernschicht 2 hat an ihren Oberflächen außenliegende Holz- und/oder Zellulosefasern 3, die durch die Verwitterung des Harzes 4, das die Fasern 3 umgibt, freigelegt werden. Die freigelegten Fasern 3 verwittern geringfügig.

Die Kernschicht2 besteht aus einer odermehreren Schichten aus Holz- und/oder Zellulosefasern 3, 6 und Harz 4, wobei der Anteil der Fasern zwischen 50 und 90 Gew.-%, insbesondere 70 Gew.-% beträgt. Im allgemeinen wird die Kernschicht 2 aus einer bis drei Schichten zusammengefügt. Den Holzfasern können Zellulosefasern und industrielle Abfälle aus Holz, Papier und Zellulose wie beispielsweise Holzschliff oder Holzmehl hinzugefügt werden. Ein Teil der Holz- und der Zellulosefasern bzw. der Holzabfälle kann durch Kunststoffabfälle in Form von Fasern oder Granulat ersetzt werden. Die Holzschnitzel werden in einem Dampfkessel mit Wasserdampf bei einem Druck von 1 bis 10 bar erweicht und anschließend zu Holzfasern zerkleinert, die eine Länge von 0,3 bis 30 mm, eine mittlere Länge von 0,5 bis 3 mm und einen mittleren Durchmesser von 0,025 bis 0,05 mm besitzen. Länge und Durchmesser der Zellulosefasern liegen in den gleichen Bereichen, wobei derDurchmesserbereich 0,01 bis 1 mm beträgt. Während der Zerfaserung mit Wasserdampf oder unmittelbar vor dem Trocknen können die Holzteilchen einer chemischen Reäktion Formaldehyd unterzogen werden, beispielsweise durch eine Dampfbehandlung bei 3 bis 10 bar und einer Temperatur von 80 bis 180 °C. Durch diese Vorbehandlung werden besonders maßbeständige und wasserunempfindliche Platten erhalten. Noch in feuchtem Zustand oder nach der Trocknung auf 3 bis 10 Gew.-% Feuchtigkeitsgehalt wird ein Phenol-Formaldehydharz zur Bindung der losen Holzfasern hinzugefügt. Besonders geeignete Phenol-Formaldehydharze sind in der EP-B 0 081 147 ebenso wie bekannte flammwidrige Additive, die dem Harz zugesetzt werden, beschrieben.

Die Harzauftragsmenge auf den Fasern beträgt 15 bis 90 Gew.-%, bezogen auf das Fasergewicht, insbesondere 15 bis 60 Gew.-%. Die beharzten Fasern werden anschließend beispielsweise mit Heißluft getrocknet bis zu einer Restfeuchte von 2 bis 15 Gew.-%, vorzugsweise 4 bis 10 Gew.-%, wobei das Harz teilweise aushärtet.

Nach der Trocknung werden die Fasern gelagert oder direkt zu einer Streu-Einrichtung gebracht. Die beharzten Fasern können ohne oder mit Farbstoffpigmente weiterverarbeitet werden. Bevor die beharzten Fasern im letzteren Fall weiterverarbeitet werden, werden sie mit Farbstoffpigmenten vermischt, die beispielsweise eine Größe von 10 um bis 1,5 mm aufweisen. Der Anteil der Farbstoffpigmente ist größer 0 bis 20 Gew.-% an dem Gesamtgewicht aus beharzten Fasern und Farbstoffpigmenten. Die Mischung aus beharzten Fasern und Farbstoffpigmenten wird dann direkt der Streu-Einrichtung zugeführt, welche die Fasern und die Farbstoffpigmente kontinuierlich gleichmäßig in Wirrlage ablegt, so daß über die gesamte Breite eines horizontalen Transportbandes verteilt eine vliesstoffartige Matte entsteht, die entweder einzeln oder zusammen mit anderen derartigen vliestoffartigen Matten zu der Kernschicht 2 der Platte 1 verpreßt wird. Nach dem kontinuierlichen Formen der Matte auf dem Transportband mittels Kratzern, Bürsten, Bändern oder Walzen wird die Matte in einer Kalandereinrichtung bei etwa 3 bis 25 bar vorverpreßt und unter Dickenverminderung verdichtet. Die vorverdichtete Matte, wird bei einer Temperatur von 120 bis 200 °C und einem Druck von 30 bis 100 bar in Preßvorrichtungen gepreßt und ausgehärtet. Während des Pressens entsteht durch Aushärten des Harzes eine vernetzte, homogene Schicht aus Holz- und Zellulosefasern 6, in der die Farbstoffpigmente 5 eingeschlossen sind. Werden mehrere Matten zu einer Platte 1 verpreßt, so werden nur den beiden außenliegenden Matten Farbstoffpigmente zugesetzt, während die dazwischen liegende Matte oder Matten keine Farbstoffpigmente enthalten. Geeignete Farbstoffpigmente sind Titandioxid, Zinksulfid, Zinksulfat, rotes und gelbes Eisenoxid, Chinacridon-Pigmente mit violett-roten Farbnuancen. Die Chinacridon-Pigmente haben im allgemeinen violett-rote Farbnuancen. Grundkörper für die Pigmente ist das Chinacridon C₂₀H₁₂N₂O₂, das in Lösung eine Gelbfärbung mit blaugrüner Fluoreszenz zeigt. Ganz allgemein sind die Farbstoffpigmente aus der Gruppe der anorganischen, gefärbten oxidischen Pigmente, anorganischen Pigmente mit Hydroxygruppen, anorganischen sulfidischen Pigmente, Ruß-Pigmente und/oder Chinacridon-Pigmente ausgewählt.

Als Harze zum Beschichten der Zellulose- und/oder Holzfasern kommen neben hitzehärtbaren Phenol-Fonnaldehydharzen vor allem Melamin- oder Epoxidharze in Frage. Der Harzanteil beträgt im allgemeinen 10 bis 50 Gew.-% der Mischung aus Zellulose- und/oder Holzfasern und dem Harz. Der Zellulose- und/oder Holzfaseranteil an dieser Mischung kann 50 bis 90 Gew.-% ausmachen.

Die Dichte der Platte 1 liegt im Bereich von 1100 bis 1500 kg/m³ und es werden Platten mit Dicken von 2 bis 40 mm, insbesondere von 2 bis 20 mm hergestellt. Wie schon erwähnt, enthält das hitzehärtbare Harz die Farbstoffpigmente, jedoch ist es ebenso möglich, die Farbstoffpigmente mit den harzbeschichteten Holz- und/oder Zellulosefasern zu mischen. Der Anteil der Farbstoffpigmente an dem Gewicht der Mischung aus Farbstoffpigmenten und Holz- und/oder Zellulosefasern ist im allgemeinen größer 0 bis 20 Gew.-%. Die Farbstoffpigmente besitzen eine Größe von 10 µm bis 1,5 mm. Durch die Auswahl der Farbstoffpigmente ist es möglich unterschiedliche Färbungen der Kernschicht 2 zu erzielen. Durch die Verwitterung der Holz- und/oder Zellulosefasern an den Oberflächen der Kernschicht kommt es zu dem Patina-Effekt, durch den die sichtbare Oberfläche der Platte 1 einen grau-silbrigen Patinaschleier aufweist, der sich über die Originalfarbe der Kernschicht 2 legt.

### Beispiel 1

Platten aus Holzfasern und einem phenolischen Harz, denen keine Farbstoffpigmente zugesetzt sind, zeigen eine braune Färbung. Nach erfolgter Verwitterung sind die Platten wie verwittertes Jatoba-Holz gefärbt.

### Beispiel 2

Platten aus Holzfasern, einem phenolischem Harz und 1 bis 5 Gew.-% Titandioxid, bezogen auf das Gesamtgewicht aus beharzten Fasern und Farbstoffpigmenten, zeigen eine helle Farbe ähnlich derjenigen von Fichtenholz. Nach erfolgter Verwitterung sind die Platten wie verwittertes Amerikanisches Kirschbaumholz und/oder Europäisches Eichenholz gefärbt.

### Beispiel 3

Platten aus Holzfasern, einem phenolischen Harz sowie 1 bis 5 Gew.-% Titandioxid und 0,05 bis 1 Gew.-% Eisenoxid rot, jeweils bezogen auf das Gesamtgewicht aus beharzten Fasern und Farbstoffpigmenten, zeigen eine Farbe wie Amerikanisches Kirschbaumholz. Nach erfolgter Verwitterung sind die Platten wie verwittertes Merantiholz gefärbt.

Derartige Platten werden zu Außenverkleidungen von Gebäuden beispielsweise durch vorgehängteFassaden, als Wand-und Dachblenden, Brüstungsplatten und Balkonverkleidungen verwendet. Diese Aufzählung ist keineswegs vollständig und stellt keine Beschränkung der Verwendungsmöglichkeiten der erfindungsgemäßen Platte dar.

## Patentansprüche

1. Dekorative, insbesondere für Innen- und Außenanwendung an Gebäuden geeignete Platte, bestehend aus einem gepreßten ein- oder mehrschichtigen Kern aus Holz-und/oderZellulosefasern, die von hitzegehärtetem Harz umgeben sind, **dadurch gekennzeichnet, daß** die Kernschicht (2) Holz- und/oder Zellulosefasern (3,6) mit einer Länge von 0,3 bis 30 mm und Farbstoffpigmente (5) enthält, und dass ein Teil von Fasern (3), der an die Oberflächen der Kernschicht (2) angrenzt, freiliegt

2. Platte nach Anspruch 1, **dadurch gekennzeichnet, daß** die Kernschicht (2) Farbstoffpigmente (5) enthält und dass die Farbstoffpigmente (5) aus der Gruppe der anorganischen, gefärbten oxidischen Pigmente, anorganischen Pigmente mit Hydroxygruppen, anorganischen sulfidischen Pigmente, Ruß-Pigmente, Phthalocyanin-Pigmente und/oder Chinacridon-Pigmente ausgewählt sind.

3. Platte nach Anspruch 1, **dadurch gekennzeichnet, daß** die Farbstoffpigmente (5) aus der Gruppe Titandioxid, Zinksulfid, Zinksulfat, rotes und gelbes Eisenoxid, blaue Phthalcyanin-Pigmente, Lampenschwarz-Pigmente, oxidische Schwarzpigmente und/oder Chinacridon-Pigmente mit violett-roten Farbnuancen ausgewählt sind.

4. Platte nach Anspruch 1, **dadurch gekennzeichnet, daß** die Verwitterung des Harzes und der Holz- und Zellulosefasern (3) an den Oberflächen Kernschicht (2) einen Patinaschleier grau-silbriger Farbe ergibt.

5. Platte nach Anspruch 4, **dadurch gekennzeichnet, daß** an den Plattenoberflächen sich der grau-silbrige Patinaschleier über die Originalfarbe der Kernschicht (2) legt.

6. Platte nach Anspruch 4 oder 5, **dadurch gekennzeichnet, daß** im Trockenzustand der Platte die Originalfärbung einen grau-silbrigen Patinaschleier zeigt und daß im Naßzustand der Platte die Färbung weitgehend der Originalfärbung entspricht.

7. Platte nach Anspruch 1, **dadurch gekennzeichnet, daß** die Zellulose- und/oder Holzfasern mit einem hitzehärtbaren Phenol-Formaldehyd-, Melamin- oder Epoxidharz beschichtet sind, wobei der Harzanteil 10 bis 50 Gew.-% und der Zellullose- und/oder Holzanteil 50 bis 90 Gew.-% der Mischung aus Zellulose- und/oder Holzfasern und Harz beträgt.

8. Platte nach Anspruch 1, **dadurch gekennzeichnet, daß** die Dichte der Platte 1100 bis 1500 kg/m³ beträgt und daß sie eine Dicke von 2 bis 40, insbesondere von 2 bis 20 mm hat.

9. Platte nach einem der Ansprüche 1, 2, 3 und 7, **dadurch gekennzeichnet, daß** das hitzehärtbare Harz die Farbstoffpigmente (5) enthält.

10. Platte nach einem der Ansprüche 1, 2, 3 und 7, **dadurch gekennzeichnet, daß** der Anteil der Farbstoffpigmente größer 0 bis 20 Gew.-% an dem Gewicht der Mischung aus Holz- und/oder Zellulosefasern ohne oder mit Farbstoffpigmente(n) beträgt.

11. Platte nach Anspruch 9 oder 10, **dadurch gekennzeichnet, daß** die Farbstoffpigmente (5) mit den Harz beschichteten Holz- und/oder Zellulosefasern (6) gemischt sind und eine Größe von 10 µm-bis 1,5 mm besitzen.

12. Verwendung der Platte nach einem der Ansprüche 1 bis 11 zur Außenverkleidung von Gebäuden in Form einer vorgehängten Fassade, Wand- und Dachblende, Brüstungsplatte oder Balkonverkleidung.

13. Verfahren zur Herstellung einer Platte nach einem der Ansprüche 1 bis 11, bei dem eine oder mehrere mechanisch vorverdichtete Schichten aus Zellulose und/oder Holzfasern, die von einem hitzehärtbaren Harz eingeschlossen sind, übereinander liegend unter Hitze miteinander zu einem Kern verpreßt werden, wobei das Harz gehärtet wird, **dadurch gekennzeichnet, daß** die Farbstoffpigmente in das Harz vor der Harzbeschichtung der Zellulose- und/oder Holzfasern in den mechanisch vorverdichteten Schichten eingebracht werden.

14. Verfahren zur Herstellung einer Platte nach einem der Ansprüche 1 bis 11, bei dem eine oder mehrere mechanisch vorverdichtete Schichten aus Zellulose- und/oder Holzfasern, die von einem hitzehärtbaren Harz eingeschlossen sind, übereinander liegend unter Hitze miteinander verpreßt werden, wobei das Harz gehärtet wird, **dadurch gekennzeichnet, daß** die Farbstoffpigmente mit den beharzten Zellulose- und/oder Holzfasern zumindest einer Schicht, vor dem Verpressen der Schicht gemischt werden.

15. Verfahren nach Anspruch 13 oder 14, **dadurch gekennzeichnet, daß** die vorverdichteten Schichten, ohne Lackierung der Oberflächen oder Beschichtung mit Dekor-, Kunststoff-, Papier- oder Holzfolien, bei einer Temperatur von 120 bis 180 °C und einem Druck von 30 bis 100 bar miteinander zu dem Kern einer Platte verpreßt werden.

## Claims

1. Decorative sheet, particularly suitable for use on the outside or inside of buildings, and composed of a compression-moulded core having one or more layers and made from wood fibres and/or cellulose fibres surrounded by hot-curing resin, **characterized in that** the core layer (2) comprises wood fibres and/or cellulose fibres (3,6) of length from 0.3 to 30 mm and pigments (5), and **in that** a part of said fibres (3) adjacent at the surfaces of the core layer (2), lies free.

2. Sheet according to Claim 1, **characterized in that** the core layer (2) comprises pigments (5), and **in that** the pigments (5) have been selected from the group consisting of inorganic, colored oxidic pigments, inorganic pigments with hydroxyl groups, inorganic sulphidic pigments, carbon black pigments, phthalocyanine pigments and quinacridone pigments.

3. Sheet according to Claim 1, **characterized in that** the pigments (5) have been selected from the group consisting of titanium dioxide, zinc sulphide, zinc sulphate, red and yellow iron oxide, blue phthalocyanine pigments, lamp black pigments, oxidic black pigments and quinacridone pigments with violet-red hues.

4. Sheet according to Claim 1, **characterized in that** the weathering of the resin and of the wood fibres and cellulose fibres (3) gives a grey-silver-coloured patina on the surfaces of the core layer (2).

5. Sheet according to Claim 4, **characterized in that** the grey-silver patina overlies the original colour of the core layer (2) at the surfaces of the sheet.

6. Sheet according to Claim 4 or 5, **characterized in that** the original coloration has a grey-silver patina when the sheet is dry, and **in that**, when the sheet is wet the coloration is substantially the same as the original coloration.

7. Sheet according to Claim 1, **characterized in that** the cellulose fibres and/or wood fibres have been coated with a hot-curing phenol-formaldehyde resin, melamine resin or epoxy resin, the proportion of resin being from 10 to 50% by weight and the proportion of cellulose and/or of wood being from 50 to 90% by weight, in the mixture made from cellulose fibres and/or wood fibres and resin.

8. Sheet according to Claim 1, **characterized in that** its density is from 1100 to 1500 kg/m³ and **in that** its thickness is from 2 to 40 mm, in particular from 2 to 20 mm.

9. Sheet according to any of Claims 1, 2 3 and 7, **characterized in that** the hot-curing resin comprises the pigments (5).

10. Sheet according to any of Claims 1, 2, 3 and 7, **characterized in that** the proportion of the pigments is greater than from 0 to 20% by weight of the weight of the mixture made from wood fibres and/or cellulose fibres without or with pigments.

11. Sheet according to Claim 9 or 10, **characterized in that** the pigments (5) have been mixed with the resin-coated wood fibres and/or resin-coated cellulose fibres (6), and their size is from 10 µm to 1.5 mm.

12. Use of the sheet according to any of Claims 1 to 11, for external cladding of buildings, in the form of a curtain facade, a panel screening a wall or roof, a parapet panel or apron panel, or a facing for a balcony.

13. Process for producing a sheet according to any of Claims 1 to 11, in which one or more mechanically precompacted layers made from cellulose fibres and/or from wood fibres, enclosed by a hot-curing resin, are placed one on top of the other and press-moulded with one another, using heat, to give a core, where the resin is cured, **characterized in that** the pigments are introduced into the resin prior to resin-coating the cellulose fibres and/or wood fibres within the mechanically precompacted layers.

14. Process for producing a sheet according to any of Claims 1 to 11, in which one or more mechanically precompacted layers made from cellulose fibres and/or from wood fibres, enclosed by a hot-curing resin, are placed one on top of the other and press-moulded to one another, using heat, where the resin is cured, **characterized in that** the pigments are mixed with the resin-treated cellulose fibres and/or wood fibres of at least one layer prior to press-moulding of the layer.

15. Process according to Claim 13 or 14, **characterized in that** without applying any liquid coating to the surfaces or applying a coating of decorative films, plastic films, paper foils or wood veneers, the precompacted layers are press-moulded to one another at a temperature of from 120 to 180°C and at a pressure of from 30 to 100 bar to give the core of a sheet.

## Revendications

1. Plaque décorative convenant notamment à une application interne ou externe sur un édifice, composée d'un noyau comprimé mono- ou multi- couches de fibres de bois et/ou de cellulose qui sont entourées par une résine thermo-durcie, **caractérisée en ce que** la couche centrale (2) comprend des fibres de bois et/ou de cellulose (3, 6) d'une longueur de 0,3 à 30 mm ainsi que des pigments colorants (5), et **en ce qu'**une partie des fibres (3) adjacente aux surfaces supérieures de la couche centrale est dégagée.

2. Plaque selon la revendication 1, **caractérisée en ce que** la couche centrale (2) contient des pigments colorants (5) et **en ce que** les pigments colorants (5) sont choisis dans le groupe comprenant les pigments oxydes colorés inorganiques, les pigments inorganiques avec des groupes hydroxy, les pigments inorganiques sulfidiques, les pigments à base de suie, les pigments à base de phtalocyanine et/ou les pigments à base de quinacridone.

3. Plaque selon la revendication 1, **caractérisée en ce que** les pigments colorants (5) sont choisis dans le groupe comprenant le dioxyde de titane, le sulfure de zinc, le sulfate de zinc, l'oxyde de fer rouge et jaune, les pigments phtalocyanine bleues, les pigments à base de noir de lampe, les pigments noirs oxydes et/ou les pigments à base de quinacridone ayant des nuances de couleur violettes-rouges.

4. Plaque selon la revendication 1, **caractérisée en ce que** le vieillissement de la résine et des fibres de bois et de cellulose (3) donne un voile patiné de couleur gris argenté aux surfaces supérieures de la couche centrale (2).

5. Plaque selon la revendication 4, **caractérisée en ce que**, sur les surfaces supérieures de la plaque, le voile patiné gris argenté se situe au-dessus la couleur originale de la couche centrale (2).

6. Plaque selon la revendication 4 ou 5, **caractérisée en ce que**, lorsque la plaque se trouve à l'état sec, la coloration originale présente un voile gris argenté tandis que, lorsque la plaque se trouve à l'état mouillé, la coloration correspond dans une grande mesure à la coloration originale.

7. Plaque selon la revendication 1, **caractérisée en ce que** les fibres de cellulose et/ou de bois sont recouvertes par une couche de résine à base de phénol-formaldéhyde, de mélamine ou époxy thermodurcissable, la part de résine représentant de 10 à 50 % en poids et la part de fibres de cellulose et/ou de bois représentant de 50 à 90 % en poids du mélange de fibres de cellulose et/ou de bois et de résine.

8. Plaque selon la revendication 1, **caractérisée en ce que** la densité de la plaque varie de 1100 à 1500 kg/m³, et **en ce qu'**elle possède une épaisseur allant de 2 à 40 mm, et plus particulièrement de 2 à 20 mm.

9. Plaque selon l'une des revendications 1, 2, 3 et 7, **caractérisée en ce que** la résine thermodurcissable contient le pigment colorant (5).

10. Plaque selon l'une des revendications 1, 2, 3 et 7, **caractérisée en ce que** la part de pigment colorant varie de plus de 0 à 20% en poids par rapport au poids du mélange de fibres de bois et/ou de cellulose sans ou avec pigment(s) colorant(s).

11. Plaque selon la revendication 9 ou 10, **caractérisée en ce que** les pigments colorants (5) sont mélangés avec les fibres de bois et/ou de cellulose (6) recouvertes d'une couche de résine, avec une taille allant de 10 µm à 1,5 mm.

12. Utilisation d'une plaque selon l'une quelconque des revendication 1 à 11, pour le revêtement extérieur d'édifices sous forme d'une façade suspendue, d'un panneau de mur ou de toit, de plaque de parapet ou de revêtement de balcon.

13. Procédé de fabrication d'une plaque selon l'une quelconque des revendications 1 à 11, dans lequel une ou plusieurs couches mécaniquement précomprimées, de fibres de cellulose et/ou de bois enrobées d'une résine thermodurcissable sont superposées et comprimées ensemble sous l'effet de chaleur de manière à former un noyau, avec durcissement de la résine, **caractérisé en ce que** les pigments colorants sont introduits dans la résine avant le recouvrement avec la résine des fibres de cellulose et/ou de bois dans les couches mécaniquement précomprimées.

14. Procédé de fabrication d'une plaque selon l'une quelconque des revendications 1 à 11, dans lequel une ou plusieurs couches mécaniquement précomprimées de fibres de cellulose et/ou de bois enrobées d'une résine thermodurcissable sont superposées et comprimées ensemble sous l'effet de chaleur de manière à durcir la résine, **caractérisé en ce que** les pigments colorants sont mélangés aux fibres de cellulose et/ou de bois enrobées de résine d'au moins une couche avant le pressage.

15. Procédé selon la revendication 13 ou 14, **caractérisé en ce que** les couches précomprimées, sans vernissage des surfaces ni recouvrement avec des feuilles de décor de plastique, de papier ou de bois, sont comprimées ensemble à une température de 120 à 180° C et à une pression de 30 à 100 bars de manière à former le noyau d'une plaque.
